# EUROPEAN PATENT APPLICATION

(11) **EP 4 398 372 A1**
(43) Date of publication of application: **10.07.2024**
(21) Application number: 22864033.0
(22) Date of filing: 28.06.2022
(51) Int. Cl.: H01M 10/0587, H01M 4/13, H01M 4/36, H01M 4/38, H01M 4/48, H01M 10/0566

(54) **NONAQUEOUS ELECTROLYTE SECONDARY BATTERY**

(30) Priority: 30.08.2021 JP 2021140021
(71) Applicant: Panasonic Energy Co., Ltd., Osaka 570-8511 (JP)
(72) Inventor: MORIYA, Shigeki, Kadoma-shi, Osaka 571-0057 (JP)
(74) Representative: Novagraaf International SA
(86) International application number: PCT/JP2022/025694
(87) International publication number: WO 2023/032445

(57) **Abstract**

A nonaqueous electrolyte secondary battery according to one embodiment of the present disclosure is provided with: an electrode body which is obtained by winding a positive electrode and a negative electrode, with a separator being interposed therebetween; and a nonaqueous electrolyte solution. This nonaqueous electrolyte secondary battery is characterized in that: the negative electrode (12) comprises a negative electrode collector (30) and a negative electrode mixture layer (32) that is arranged on the negative electrode collector (30), while containing an Si-based material; the negative electrode mixture layer (32) comprises a pair of end-part mixture layers (34) which are arranged on both ends in the width direction D2 that is perpendicular to the winding direction D1 and a center-part mixture layer (36) which is sandwiched between the pair of end-part mixture layers (34); and the average particle diameter of the Si-based material in the pair of end-part mixture layers (34) is larger than the average particle diameter of the Si-based material in the center-part mixture layer (36).

## Description

### TECHNICAL FIELD

The present disclosure relates to a non-aqueous electrolyte secondary battery.

### BACKGROUND

Si-based materials are alloying materials to be alloyed with lithium and capable of occluding a larger amount of lithium ions per unit volume than carbon-based materials such as graphite, and therefore use of Si-based materials in negative electrode active materials of non-aqueous electrolyte secondary batteries has been studied (see, for example, Patent Literature 1).

### CITATION LIST

### PATENT LITERATURE

Patent Literature 1: JP 2019-536234 A
Patent Literature 2: JP 2005-209411 A
Patent Literature 3: JP 2015-191879 A

### SUMMARY

### TECHNICAL PROBLEM

Now, if a Si-based material is used as a negative electrode active material of a non-aqueous electrolyte secondary battery including a wound electrode assembly in which a positive electrode and a negative electrode are wound with a separator interposed therebetween, the amount of expansion of the negative electrode active material during charging is so large that an electrolyte contained in a center of the negative electrode is forced away to both ends in the width direction of the negative electrode and thus the center of the negative electrode tends to lack an electrolyte. As described above, if distribution of the electrolyte becomes non-uniform in the negative electrode, the electrode reaction also becomes non-uniform, and the charge-discharge cycle characteristics tend to deteriorate.

Therefore, an object of the present disclosure is to suppress deterioration of charge-discharge cycle characteristics in a non-aqueous electrolyte secondary battery using a Si-based material as a negative electrode active material.

### SOLUTIONS TO PROBLEM

A non-aqueous electrolyte secondary battery of an aspect of the present disclosure includes an electrode assembly in which a positive electrode and a negative electrode are wound with a separator interposed therebetween and a non-aqueous electrolyte, and the negative electrode includes a negative electrode current collector and a negative electrode mixture layer that is disposed on the negative electrode current collector and contains an Si-based material, the negative electrode mixture layer includes a pair of end mixture layers disposed on both ends in a width direction perpendicular to a winding direction and a center mixture layer interposed between the pair of end mixture layers, and the Si-based material in the pair of end mixture layers has an average particle size larger than an average particle size of the Si-based material in the center mixture layer.

### ADVANTAGEOUS EFFECTS OF INVENTION

According to the present disclosure, it is possible to suppress deterioration of charge-discharge cycle characteristics in a non-aqueous electrolyte secondary battery using a Si-based material as a negative electrode active material.

### BRIEF DESCRIPTION OF DRAWINGS

FIG. 1 is a sectional view of a non-aqueous electrolyte secondary battery of an example of an embodiment.
FIG. 2 is a partial schematic perspective view showing an example of a configuration of a negative electrode.

### DESCRIPTION OF EMBODIMENTS

A non-aqueous electrolyte secondary battery of an aspect of the present disclosure includes an electrode assembly in which a positive electrode and a negative electrode are wound with a separator interposed therebetween and a non-aqueous electrolyte, and the negative electrode includes a negative electrode current collector and a negative electrode mixture layer that is disposed on the negative electrode current collector and contains an Si-based material, the negative electrode mixture layer includes a pair of end mixture layers disposed on both ends in a width direction perpendicular to a winding direction and a center mixture layer interposed between the pair of end mixture layers, and the Si-based material in the pair of end mixture layers has an average particle size larger than an average particle size of the Si-based material in the center mixture layer. The Si-based material having a large average particle size has a larger amount of expansion during charging than the Si-based material having a small average particle size, and therefore in the pair of end mixture layers, a gap in which the non-aqueous electrolyte can move is small during charging. Therefore, the pair of end mixture layers act to block the non-aqueous electrolyte forced away from the center mixture layer during charging. Thus, according to the present disclosure, the non-aqueous electrolyte is restrained from being forced away from both ends in the width direction of the negative electrode to the outside of the negative electrode (substantially, forced away from both ends in the winding axis direction of the wound electrode assembly to the outside). The pair of end mixture layers are disposed on both ends in the width direction of the negative electrode, and therefore the electrolyte forced away to the outside of the negative electrode can quickly return to the pair of end mixture layers. As a result, in the negative electrode, the distribution of the non-aqueous electrolyte is restrained from being non-uniform, and in addition, the electrode reaction is restrained from being non-uniform, and deterioration of the charge-discharge cycle characteristics is suppressed.

Hereinafter, embodiments of the non-aqueous electrolyte secondary battery according to the present disclosure will be described in detail with reference to the drawings.

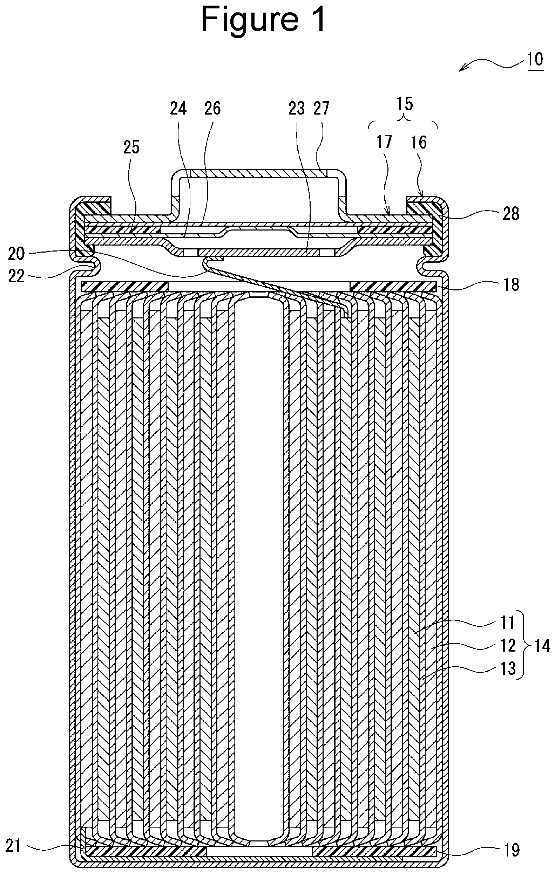

FIG. 1 is a sectional view of a non-aqueous electrolyte secondary battery of an example of an embodiment. A non-aqueous electrolyte secondary battery 10 illustrated in FIG. 1 includes a wound electrode assembly 14 in which a positive electrode 11 and a negative electrode 12 are wound with a separator 13 interposed therebetween, a non-aqueous electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Examples of the battery case 15 include metal cases having a cylindrical shape, a square shape, or the like, and resin cases (pouch batteries) formed by lamination with a resin sheet.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side surface part of the case body 16 protrudes inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are stacked in this order from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their centers, and the insulating member 25 is interposed between the peripheries of the lower vent member 24 and the upper vent member 26. When the internal pressure of the non-aqueous electrolyte secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and the gas is discharged from an opening of the cap 27.

In the non-aqueous electrolyte secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the inner surface of the bottom of the case body 16 by welding or the like, and the case body 16 serves as a negative electrode terminal.

Hereinafter, the positive electrode 11, the negative electrode 12, the separator 13, and the non-aqueous electrolyte included in the non-aqueous electrolyte secondary battery 10 will be described in detail.

### [Positive Electrode]

The positive electrode 11 is a long band-shaped sheet member, and includes a positive electrode current collector and a positive electrode mixture layer disposed on the positive electrode current collector. As the positive electrode current collector, a foil of a metal such as aluminum or an aluminum alloy that is stable in a potential range of the positive electrode, a film in which the metal is disposed on its surface layer, or the like can be used. The positive electrode mixture layer includes, for example, a positive electrode active material, a binder, a conductive agent, and the like. The positive electrode mixture layer is preferably formed on both surfaces of the positive electrode current collector. The positive electrode 11 can be manufactured by, for example, applying a positive electrode mixture slurry including a positive electrode active material, a binder, a conductive agent, and the like to a positive electrode current collector, and drying and rolling the applied film to form a positive electrode mixture layer on both surfaces of the positive electrode current collector.

As the positive electrode active material, for example, a lithium-transition metal composite oxide is used. Examples of the metal element contained in the lithium-transition metal composite oxide include Ni, Co, Mn, Al, B, Mg, Ti, V, Cr, Fe, Cu, Zn, Ga, Sr, Zr, Nb, In, Sn, Ta, and W. Among them, at least one of Ni, Co, or Mn is preferably contained.

Examples of the conductive agent included in the positive electrode mixture layer include carbon materials such as carbon black, acetylene black, Ketjenblack, graphene, carbon nanotubes, and graphite. Examples of the binder included in the positive electrode mixture layer include fluororesins such as polytetrafluoroethylene (PTFE) and polyvinylidene fluoride (PVDF), polyacrylonitrile (PAN), polyimides, acrylic resins, polyolefins, carboxymethylcellulose (CMC) and its salts, and polyethylene oxide (PEO).

### [Negative Electrode]

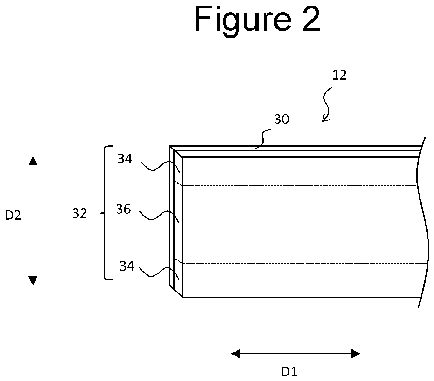

FIG. 2 is a partial schematic perspective view showing an example of a configuration of a negative electrode. As illustrated in FIG. 2, the negative electrode 12 is a long band-shaped sheet member, and includes a negative electrode current collector 30 and a negative electrode mixture layer 32 disposed on one main surface of the negative electrode current collector 30. Also on a main surface of the negative electrode current collector 30 opposite from the one main surface, a negative electrode mixture layer 32 that is not illustrated in FIG. 2 is disposed. That is, the negative electrode mixture layers 32 are disposed on both main surfaces of the negative electrode current collector 30.

As the negative electrode current collector 30, for example, a foil of a metal such as copper or a copper alloy that is stable in a potential range of the negative electrode, a film in which the metal is disposed on its surface layer, or the like can be used.

The negative electrode mixture layer 32 includes a negative electrode active material. The negative electrode active material contains a Si-based material that reversibly occludes and releases ions such as a lithium ion. The negative electrode active material may contain a known material such as a carbon-based material that reversibly occludes and releases ions such as a lithium ion, in addition to the Si-based material. The negative electrode mixture layer 32 may include a binder, a conductive agent, and the like, in addition to the negative electrode active material.

The negative electrode mixture layer 32 includes a pair of end mixture layers 34 disposed on both ends in a width direction D2 perpendicular to a winding direction D1 of the negative electrode 12 and a center mixture layer 36 interposed between the pair of end mixture layers 34. The winding direction D1 of the negative electrode 12 is a direction in which the negative electrode 12 and the like are wound when the wound electrode assembly 14 is produced. The winding direction D1 generally coincides with the longitudinal direction of the negative electrode 12. The width direction D2 of the negative electrode 12 generally coincides with the winding axis direction of the wound electrode assembly 14.

The Si-based material contained in the pair of end mixture layers 34 has an average particle size larger than that of the Si-based material contained in the center mixture layer 36. As described above, since the Si-based material contained in the pair of end mixture layers 34 has an average particle size larger than that of the Si-based material contained in the center mixture layer 36, the distribution of the non-aqueous electrolyte is restrained from being non-uniform in the negative electrode 12 where the distribution becomes non-uniform if the non-aqueous electrolyte is forced away from both ends in the width direction D2 of the negative electrode 12, and thus deterioration of the charge-discharge cycle characteristics is suppressed. Here, the average particle size means the volume average particle size (Dv50) at which the volume integrated value is 50% in particle size distribution measured by a laser diffraction scattering method (for example, with MS2000 manufactured by Malvern Panalytical Ltd.).

The ratio (B/A) of the average particle size of the Si-based material contained in the center mixture layer 36 (B) to the average particle size of the Si-based material contained in the pair of end mixture layers 34 (A) is preferably less than or equal to 0.7, and more preferably less than or equal to 0.5. If B/A is less than or equal to 0.7, the gap between the particles in the pair of end mixture layers 34 during charging is smaller than in a case where B/A is more than 0.7, the non-aqueous electrolyte forced away from the center mixture layer 36 can be more effectively blocked by the pair of end mixture layers 34, and therefore it is considered that deterioration of the charge-discharge cycle characteristics can be further suppressed. The lower limit of B/A is, for example, preferably greater than or equal to 0.05, and more preferably greater than or equal to 0.1 from the viewpoint of, for example, difficulty of manufacturing a Si-based material having an excessively small or excessively large average particle size.

The average particle size of the Si-based material contained in the pair of end mixture layers 34 is, for example, preferably in a range of 2 µm to 15 µm, and more preferably in a range of 4 µm to 13 µm. The average particle size of the Si-based material contained in the center mixture layer 36 is, for example, preferably in a range of 1 µm to 10 µm, and more preferably in a range of 3 µm to 8 µm. If the average particle size of the Si-based material contained in the pair of end mixture layers 34 is in the above-described range, the non-aqueous electrolyte forced away from the center mixture layer 36 may be effectively blocked by the pair of end mixture layers 34 and thus deterioration of the charge-discharge cycle characteristics may be further suppressed as compared with a case where the average particle size is out of the above-described range. If the average particle size of the Si-based material contained in the center mixture layer 36 is in the above-described range, the specific surface area of the Si-based material may be in an appropriate range and thus deterioration of the Si-based material due to a side reaction with the non-aqueous electrolyte may be suppressed as compared with a case where the average particle size is out of the above-described range.

The Si-based material contained in the pair of end mixture layers 34 and the Si-based material contained in the center mixture layer 36 are preferably in a mass ratio in a range of 40 : 60 to 60 : 40, and more preferably in a range of 45 : 55 to 55 : 45. If the mass ratio of the Si-based material is in the above-described range, the non-aqueous electrolyte may be effectively blocked by the pair of end mixture layers 34 and thus deterioration of the charge-discharge cycle characteristics may be further suppressed.

Examples of the Si-based material include Si particles, alloy particles containing Si, and composite particles containing Si. These may be used singly, or greater than or equal to two of them may be used in combination.

The Si particles are obtained, for example, with a gas phase method or by grinding silicon swarf finely, and may be manufactured with any method. Examples of the alloy particles containing Si include alloys containing Si and a metal selected from alkali metals, alkaline earth metals, transition metals, rare earth metals, and combinations thereof. The composite particles containing Si include, for example, a lithium ion conductive phase and Si particles dispersed in the lithium ion conductive phase. The lithium ion conductive phase is, for example, at least one selected from a silicon oxide phase, a silicate phase, and a carbon phase.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among them, the silicate phase is preferably a silicate phase including lithium (hereinafter, sometimes referred to as lithium silicate phase) from the viewpoints of high lithium ion conductivity and the like.

The lithium silicate phase is represented by, for example, the formula: Li_{2z}SiO_{2+z} (0 < z < 2). From the viewpoints of stability, ease of production, lithium ion conductivity, and the like, z preferably satisfies the relation of 0 < z < 1, and more preferably z = 1/2.

The composite particles in which Si particles are dispersed in a silicon oxide phase is represented by, for example, the general formula SiOₓ (in which x is preferably in a range of 0 < x < 2, and more preferably in a range of 0.5 ≤ x ≤ 1.6). The composite particles in which Si particles are dispersed in a carbon phase is represented by, for example, the general formula SiₓC_{1y} (in which x and y are preferably in ranges of 0 < x ≤ 1 and 0 < y ≤ 1, and more preferably in ranges of 0.3 ≤ x ≤ 0.45 and 0.7 ≤ y ≤ 0.55).

The Si-based material preferably has a particle surface on which a conductive film including a material having high conductivity is formed. Examples of the conductive film include carbon films, metal films, and metal compound films, and a carbon film is preferable from the viewpoints of electrochemical stability and the like. The carbon film can be formed with, for example, a CVD method in which acetylene, methane, or the like is used, a method in which coal pitch, petroleum pitch, a phenol resin, or the like is mixed with a silicon-based active material and the mixture is heat-treated, or the like. The conductive film may also be formed by fixing a conductive filler such as carbon black to the particle surface of the Si-based material using a binder.

The pair of end mixture layers 34 preferably contain the Si-based material at a content (ratio of the mass of the Si-based material to the total mass of the negative electrode active material) in a range of 3 mass% to 15 mass%, and more preferably in a range of 5 mass% to 12 mass% with respect to the total mass of the negative electrode active material contained in the pair of end mixture layers 34. The center mixture layer 36 preferably contains the Si-based material at a content in a range of 3 mass% to 15 mass%, and more preferably in a range of 5 mass% to 12 mass% with respect to the total mass of the negative electrode active material contained in the center mixture layer 36. If the content of the Si-based material in the pair of end mixture layers 34 and the content of the Si-based material in the center mixture layer 36 are in the above-described ranges, the non-aqueous electrolyte forced away from the center mixture layer 36 may be effectively blocked by the pair of end mixture layers 34 and thus deterioration of the charge-discharge cycle characteristics may be further suppressed as compared with a case where the contents are out of the above-described ranges.

The ratio of the area of the center mixture layer 36 to the area of the pair of end mixture layers 34 is, for example, preferably in a range of 30 : 70 to 45 : 55, and more preferably in a range of 35 : 65 to 40 : 60. If the ratio of the area of the center mixture layer 36 to the area of the pair of end mixture layers 34 is greater than or equal to 30/70, the area of the pair of end mixture layers 34 is not excessively large, and therefore expansion of the Si-based material during charging may force only a small amount of the non-aqueous electrolyte held in the pair of end mixture layers 34 away to the outside of the negative electrode 12, and thus deterioration of the charge-discharge cycle characteristics may be further suppressed as compared with a case where the ratio is less than 30/70. If the ratio of the area of the center mixture layer 36 to the area of the pair of end mixture layers 34 is less than or equal to 45/55, the area of the pair of end mixture layers 34 is not excessively small, and therefore the non-aqueous electrolyte forced away from the center mixture layer 36 may be effectively blocked by the pair of end mixture layers 34, and thus deterioration of the charge-discharge cycle characteristics may be further suppressed as compared with a case where the ratio is more than 45/55. The areas of the center mixture layer 36 and the end mixture layers 34 refer to the areas determined from the dimension in the longitudinal direction (dimension in the winding direction D 1 in FIG. 2) × the dimension in the lateral direction (dimension in the width direction D2 in FIG. 2) when the negative electrode mixture layer 32 is viewed as a long band-shaped layer in plan view.

The known material that may be contained as the negative electrode active material in addition to the Si-based material is, for example, preferably a carbon-based material, and particularly preferably a graphite material from the viewpoint of, for example, suppressing deterioration of the charge-discharge cycle characteristics. Examples of the graphite material include natural graphite and artificial graphite, and are not particularly limited. The content of the graphite material as the negative electrode active material may be, for example, in a range of 80 mass% to 95 mass% or in a range of 85 mass% to 90 mass% with respect to the total mass of the negative electrode active material.

Examples of the conductive agent include carbon black, acetylene black, Ketjenblack, and carbon nanotubes. The content of the conductive agent may be, for example, in a range of 0.1 mass% to 5 mass% with respect to the total mass of the negative electrode active material.

Examples of the binder include the binders described as the examples for the positive electrode 11. The content of the binder may be, for example, in a range of 0.5 mass% to 10 mass% with respect to the total mass of the negative electrode active material.

An example of a method for producing the negative electrode 12 will be described. For example, a negative electrode active material containing a Si-based material A, a binder, and the like are mixed together with a solvent such as water to prepare a negative electrode mixture slurry for a center mixture layer. Separately from this slurry, a negative electrode active material containing a Si-based material B having a larger average particle size than the Si-based material A, a binder, and the like are mixed together with a solvent such as water to prepare a negative electrode mixture slurry for an end mixture layer. Then, the negative electrode mixture slurry for a center mixture layer is applied to the center of a negative electrode current collector 30 and dried to form a center mixture layer 36, and then the negative electrode mixture slurry for an end mixture layer is applied to both ends of the negative electrode current collector 30 and dried to form a pair of end mixture layers 34. A negative electrode mixture layer 32 including the center mixture layer 36 and the pair of end mixture layers 34 is formed on both surfaces of the negative electrode current collector 30 and then rolled. Thus, the negative electrode 12 of the present embodiment can be produced. In the above method, the negative electrode mixture slurry for a center mixture layer is applied first, but for example, the negative electrode mixture slurry for an end mixture layer may be applied first, or the negative electrode mixture slurry for a center mixture layer and the negative electrode mixture slurry for an end mixture layer may be applied simultaneously.

### [Separator]

As the separator 13, a porous sheet having an ion permeation property and an insulating property is used. Specific examples of the porous sheet include microporous thin films, woven fabrics, and nonwoven fabrics. As the material of the separator 13, olefin-based resins such as polyethylene, polypropylene, and copolymers containing at least one of ethylene or propylene, cellulose, and the like are suitable. The separator 13 may have a single-layer structure or a multilayer structure. On the surface of the separator 13, a heat-resistant layer or the like may be formed.

### [Non-Aqueous Electrolyte]

The non-aqueous electrolyte includes a non-aqueous solvent and an electrolyte salt. As the electrolyte salt, for example, a lithium salt such as LiFSI, LiTFSI, LiBF₄, or LiPF₆ is used. As the solvent, for example, an ester such as ethylene carbonate (EC), propylene carbonate (PC), dimethyl carbonate (DMC), ethyl methyl carbonate (EMC), diethyl carbonate (DEC), methyl acetate (MA), or methyl propionate (MP), an ether, a nitrile, an amide, or a mixed solvent of greater than or equal to two kinds thereof is used. The non-aqueous solvent may contain a halogen-substituted product in which at least a part of hydrogen in the solvent described above is substituted with a halogen atom such as fluorine.

Examples of the halogen-substituted product include fluorinated cyclic carbonic acid esters such as fluoroethylene carbonate (FEC), fluorinated chain carbonic acid esters, and fluorinated chain carboxylic acid esters such as methyl fluoropropionate (FMP).

### EXAMPLES

Hereinafter, the present disclosure will be further described with reference to Examples, but the present disclosure is not limited to these Examples.

### <Example 1>

Ninety three parts by mass of graphite powder, 7 parts by mass of a Si-based material in which Si particles were dispersed in a silicon oxide phase (composition: SiO, average particle size: 6 µm), 0.8 parts by mass of carboxymethyl cellulose, 0.5 parts by mass of carbon nanotubes, and 1.2 parts by mass of styrene-butadiene rubber were mixed. An appropriate amount of water was added to and mixed with the resulting mixture to prepare a negative electrode mixture slurry for a center mixture layer.

Furthermore, 93 parts by mass of graphite powder, 7 parts by mass of a Si-based material in which Si particles were dispersed in a silicon oxide phase (composition: SiO, average particle size: 12 µm), 0.8 parts by mass of carboxymethyl cellulose, 0.5 parts by mass of carbon nanotubes, and 1.2 parts by mass of styrene-butadiene rubber were mixed. An appropriate amount of water was added to and mixed with the resulting mixture to prepare a negative electrode mixture slurry for an end mixture layer.

In a state where both ends in the width direction of a die head were masked with a metal flat plate, the negative electrode mixture slurry for a center mixture layer was applied to the center in the width direction of a negative electrode current collector, and then dried to form a center mixture layer. Next, in a state where the center in the width direction of a die head was masked with a metal flat plate, the negative electrode mixture slurry for an end mixture layer was applied to both ends in the width direction of the negative electrode current collector, and then dried to form a pair of end mixture layers. Each slurry was applied to the negative electrode current collector so that the ratio of the area of the center mixture layer to the area of the pair of end mixture layers was 50 : 50. Each slurry was applied to both surfaces of the negative electrode current collector. A negative electrode mixture layer formed on both surfaces of the negative electrode current collector and including the center mixture layer and the pair of end mixture layers was rolled with a roller to produce a negative electrode.

LiNi_{0.8}Co_{0.15}Al_{0.05}O₂ as a positive electrode active material, acetylene black, and polyvinylidene fluoride were mixed at a mass ratio of 94 : 5 : 1, and then an appropriate amount of N-methyl-2-pyrrolidone (NMP) was added to prepare a positive electrode mixture slurry. This slurry was applied to both surfaces of an aluminum foil and then dried to form a positive electrode mixture layer. Then, the positive electrode mixture layer was rolled with a roller to produce a positive electrode.

Ethylene carbonate (EC), methyl ethyl carbonate (EMC), and dimethyl carbonate (DMC) were mixed at a volume ratio of 3 : 3 : 4. LiPF₆ was dissolved in the mixed solvent so that the concentration was 1.2 mol/L to prepare a non-aqueous electrolyte.

The positive electrode and the negative electrode were stacked so as to face each other with a 20 µm-thick separator including a polyethylene microporous film interposed therebetween, and wound with a winding core having a curvature radius of 1.5 mm, and a tape was attached to the outermost peripheral surface to produce a cylindrical wound electrode assembly. An aluminum positive electrode lead was welded to the positive electrode current collector, and a nickel negative electrode lead was welded to the negative electrode current collector. Next, the electrode assembly was housed in a bottomed cylindrical case body, the positive electrode lead was welded to a sealing assembly, and the negative electrode lead was welded to the inner surface of the bottom of the case body. The non-aqueous electrolyte was injected into the case body, and then the opening of the case body was sealed with a gasket and the sealing assembly to produce a test cell.

### <Comparative Example 1>

A test cell was produced in the same manner as in Example 1 except that SiO having an average particle size of 12 µm was used as the Si-based material in the preparation of the negative electrode mixture slurry for a center mixture layer and that SiO having an average particle size of 6 µm was used as the Si-based material in the preparation of the negative electrode mixture slurry for an end mixture layer.

### <Comparative Example 2>

A test cell was produced in the same manner as in Example 1 except that SiO having an average particle size of 12 µm was used as the Si-based material in the preparation of the negative electrode mixture slurry for a center mixture layer.

### <Example 2>

A test cell was produced in the same manner as in Example 1 except that each slurry was applied to the negative electrode current collector so that the ratio of the area of the center mixture layer to the area of the pair of end mixture layers was 70 : 30.

### <Example 3>

A test cell was produced in the same manner as in Example 1 except that each slurry was applied to the negative electrode current collector so that the ratio of the area of the center mixture layer to the area of the pair of end mixture layers was 55 : 45.

### <Example 4>

A test cell was produced in the same manner as in Example 1 except that each slurry was applied to the negative electrode current collector so that the ratio of the area of the center mixture layer to the area of the pair of end mixture layers was 30 : 70.

### <Example 5>

A test cell was produced in the same manner as in Example 1 except that each slurry was applied to the negative electrode current collector so that the ratio of the area of the center mixture layer to the area of the pair of end mixture layers was 45 : 55.

### <Example 6>

A test cell was produced in the same manner as in Example 1 except that SiO having an average particle size of 8.4 µm was used as the Si-based material in the preparation of the negative electrode mixture slurry for a center mixture layer.

### <Example 7>

A test cell was produced in the same manner as in Example 1 except that the amount of the Si-based material added was 15 parts by mass in the preparation of the negative electrode mixture slurry for a center mixture layer and the preparation of the negative electrode mixture slurry for an end mixture layer.

### <Example 8>

A test cell was produced in the same manner as in Example 1 except that the amount of the Si-based material added was 3 parts by mass in the preparation of the negative electrode mixture slurry for a center mixture layer and the preparation of the negative electrode mixture slurry for an end mixture layer.

### <Example 9>

A test cell was produced in the same manner as in Example 1 except that a Si-based material in which Si particles were dispersed in a lithium silicate phase (composition: Li₂Si₂O₅) was used in the preparation of the negative electrode mixture slurry for a center mixture layer and the preparation of the negative electrode mixture slurry for an end mixture layer.

### <Example 10>

A test cell was produced in the same manner as in Example 1 except that a Si-based material in which Si particles were dispersed in a carbon phase was used in the preparation of the negative electrode mixture slurry for a center mixture layer and the preparation of the negative electrode mixture slurry for an end mixture layer.

### [Charge-Discharge Cycle Test]

Under an environment at a temperature of 25°C, each of the test cells of Examples and Comparative Examples was charged at a constant current (current: 0.7 It = 2100 mA, final voltage: 4.1 V) and then charged at a constant voltage (voltage: 4.1 V, final current: 150 mA). Thereafter, the test cell was discharged at a constant current of 900 mA up to a final voltage of 2.75 V This charge-discharge cycle was regarded as 1 cycle, and 400 cycles of charge and discharge were performed. The capacity maintenance rate in the charge-discharge cycle of each of the test cells of Examples and Comparative Examples was calculated by the following formula. A higher capacity maintenance rate indicates larger suppression of deterioration of the charge-discharge cycle characteristics. Capacity maintenance rate (%) = (discharge capacity at 400th cycle/discharge capacity at 1st cycle) × 100

Table 1 summarizes the results of the capacity maintenance rate in Examples and Comparative Examples.

**[Table 1]**

| | Dispersion phase of Si particles in Si-based material | Average particle size (µm) of Si-based material | | Ratio of average particle size of Si-based material (center mixture layer/end mixture layer) | Area ratio of mixture layer (center mixture layer: end mixture layer) | Content of Si-based material in negative electrode active material (mass%) | Capacity maintenance rate (%) |
|---|---|---|---|---|---|---|---|
| | | Center mixture layer | End mixture layer | | | | |
| Example 1 | Silicon oxide phase | 6 | 12 | 0.5 | 50:50 | 7 | 77 |
| Comparative Example 1 | Silicon oxide phase | 12 | 6 | 2 | 50:50 | 7 | 55 |
| Comparative Example 2 | Silicon oxide phase | 12 | 12 | 1 | 50:50 | 7 | 60 |
| Example 2 | Silicon oxide phase | 6 | 12 | 0.5 | 70:30 | 7 | 72 |
| Example 3 | Silicon oxide phase | 6 | 12 | 0.5 | 55:45 | 7 | 76 |
| Example 4 | Silicon oxide phase | 6 | 12 | 0.5 | 30:70 | 7 | 78 |
| Example 5 | Silicon oxide phase | 6 | 12 | 0.5 | 45:55 | 7 | 77 |
| Example 6 | Silicon oxide phase | 8.4 | 12 | 0.7 | 50:50 | 7 | 72 |
| Example 7 | Silicon oxide phase | 6 | 12 | 0.5 | 50:50 | 15 | 71 |
| Example 8 | Silicon oxide phase | 6 | 12 | 0.5 | 50:50 | 3 | 83 |
| Example 9 | Lithium silicate phase | 6 | 12 | 0.5 | 50:50 | 7 | 75 |
| Example 10 | Carbon phase | 6 | 12 | 0.5 | 50:50 | 7 | 76 |

In all of Examples 1 to 10 in which the Si-based material in the pair of end mixture layers included in the negative electrode mixture layer had a larger average particle size than the Si-based material in the center mixture layer included in the negative electrode mixture layer, the obtained capacity maintenance rate was higher than in Comparative Example 1 in which the Si-based material in the pair of end mixture layers had a smaller average particle size than the Si-based material in the center mixture layer and Comparative Example 2 in which the Si-based material in the pair of end mixture layers and the Si-based material in the center mixture layer had the same average particle size. That is, it can be said that deterioration of the charge-discharge cycle characteristics was suppressed more in Examples 1 to 10 than in Comparative Examples 1 and 2.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Negative electrode current collector
- 32: Negative electrode mixture layer
- 34: End mixture layer
- 36: Center mixture layer

## Claims

1. A non-aqueous electrolyte secondary battery comprising:
an electrode assembly in which a positive electrode and a negative electrode are wound with a separator interposed therebetween; and
a non-aqueous electrolyte,
the negative electrode including a negative electrode current collector and a negative electrode mixture layer that is disposed on the negative electrode current collector and contains an Si-based material,
the negative electrode mixture layer including a pair of end mixture layers disposed on both ends in a width direction perpendicular to a winding direction and a center mixture layer interposed between the pair of end mixture layers, wherein
the Si-based material in the pair of end mixture layers has an average particle size larger than an average particle size of the Si-based material in the center mixture layer.

2. The non-aqueous electrolyte secondary battery according to claim 1, wherein the Si-based material contained in the pair of end mixture layers and the Si-based material contained in the center mixture layer are in a mass ratio in a range of 40 : 60 to 60 : 40.

3. The non-aqueous electrolyte secondary battery according to claim 1 or 2, wherein a ratio of an area of the center mixture layer to an area of the pair of end mixture layers is in a range of 30 : 70 to 45 : 55.

4. The non-aqueous electrolyte secondary battery according to any one of claims 1 to 3, wherein a ratio (B/A) of the average particle size of the Si-based material in the center mixture layer (B) to the average particle size of the Si-based material in the pair of end mixture layers (A) is less than or equal to 0.7.

5. The non-aqueous electrolyte secondary battery according to any one of claims 1 to 4, wherein
the pair of end mixture layers contain the Si-based material at a content in a range of 3 mass% to 15 mass% with respect to a total mass of a negative electrode active material contained in the pair of end mixture layers, and
the center mixture layer contains the Si-based material at a content in a range of 3 mass% to 15 mass% with respect to a total mass of a negative electrode active material contained in the center mixture layer.

6. The non-aqueous electrolyte secondary battery according to any one of claims 1 to 5, wherein
the Si-based material contained in the negative electrode mixture layer includes a lithium ion conductive phase and Si particles dispersed in the lithium ion conductive phase, and
the lithium ion conductive phase is at least one selected from a silicon oxide phase, a silicate phase, and a carbon phase.
